Europäisches Patentamt

European Patent Office

Office européen des brevets

(19)

(11) Veröffentlichungsnummer: **0 355 812**
**A1**

(12) **EUROPÄISCHE PATENTANMELDUNG**

(21) Anmeldenummer: 89115574.9

(22) Anmeldetag: 23.08.89

(51) Int. Cl.⁴ **A23L 1/30** , **A23L 1/22** ,
**A23L 1/40** , **A23L 3/36**

(30) Priorität: 24.08.88 DE 3828740

(43) Veröffentlichungstag der Anmeldung:
28.02.90 Patentblatt 90/09

(84) Benannte Vertragsstaaten:
AT BE CH DE ES FR GB IT LI NL

(71) Anmelder: apetito Karl Düsterberg KG
Sandkampstrasse 142-148
D-4440 Rheine(DE)

(72) Erfinder: Karnetzki, Ellen
Postdamm 15
D-4446 Hörstel(DE)
Erfinder: Vogt, Joachim
Alter Neuenkirchener Weg 31
D-4440 Rheine 1(DE)

(74) Vertreter: Riedel, Alfred Dr.
Isartorplatz 6
D-8000 München 2(DE)

(54) Verfahren zur Herstellung von beliebig portionierbaren Tiefkühl-Fertiggerichten.

(57) Das erfindungsgemäße Verfahren zur Herstellung von beliebig portionierbaren, mit Geschmacksstoffen ummantelten, tiefgefrorenen Fertiggerichten ist dadurch gekennzeichnet, daß man die einzelnen Verfahrensschritte bei über dem Gefrierpunkt liegenden Temperaturen kontinuierlich durchführt, konstante Mengen des Gemisches aus tiefgefrorenen stückigen Lebensmitteln in einen offenen Mischkanal, der sich zwischen und über zwei in einem Doppeltrog angeordneten Bürstenschnecken befindet, einspeist, während die Bürstenschnecken eine solche gesteuerte, gegenläufige Bewegung ausführen, daß das Einspeisgut freiliegend in Rotation versetzt und dabei vorwärts getrieben wird, und auf das rotierende Gut zunächst Flüssigfett durch einfaches Auftropfenlassen und anschließend ein vorgefertigtes Gemisch aus trockenen Geschmacksstoffen durch einfaches Herab-fallenlassen zudosiert.

Fig. 1/2

EP 0 355 812 A1

## Verfahren zur Herstellung von beliebig portionierbaren Tiefkühl-Fertiggerichten

Die Erfindung betrifft das in den Patentansprüchen angegebene Verfahren zur Herstellung von Tiefkühl-(TK)-Fertiggerichten.

Unter den zahlreichen auf dem Markt befindlichen TK-Fertiggerichten sind zunehmend solche von besonderer Bedeutung, die beliebig portionierbar sind, d.h. daß ein gerade benötigter Teil des tiefgefrorenen Produkts der Packung entnommen und unter Zusatz von etwas Wasser oder Milch durch einfaches Erwärmen in der Pfanne oder im Topf tafelfertig serviert werden kann, und daß dieser Vorgang mit der weiterhin in der Tiefkühltruhe aufbewahrten Restmenge beliebig wiederholbar ist. Voraussetzung hierzu ist allerdings, daß das Fertiggericht in Form eines stückigen rieselfähigen Produkts vorliegt, dessen einzelne Stücke mit den notwendigen Gewürz- und Fettkomponenten fest haftend verbunden sind, so daß diese beim Transport, bei der Portionsentnahme und bei sonstiger Handhabung nicht abgeschüttelt werden und sich am Boden der Packung ansammeln, was natürlich Qualitätseinbußen bei später entnommenen Fertiggerichtportionen zur Folge hätte.

Ein Verfahren zum Aufbringen von Geschmacksstoffen und Speisefetten auf tiefgefrorene Lebensmittel ist aus der DE-PS 29 26 992 bekannt, zu dessen Durchführung das an den stückigen tiefgefrorenen Lebensmitteln in Form von Schnee anhaftende Kondenswasser durch Vibrationsbehandlungen entfernt wird, die erhaltenen Lebensmittel chargenweise bei mindestens -20°C in einem Mischzylinder in freifliegende Wirbelbewegung versetzt werden, auf die in Wirbelbewegung befindlichen Lebensmittel Fett, das zuvor bei +30°C verflüssigt wurde, sowie Fett/Geschmacksstoff mischungen aufgesprüht werden, und schließlich eine Geschmacksstoff Bindemittel-Trockenmischung zugemischt wird.

Dieses Verfahren hat zahlreiche Nachteile. So ist die Entfernung von Kondenswasserschnee, die sich zur Erzielung der notwendigen Haftung von Fett und Geschmacksstoffen als notwendig erweist, zeit- und kostenaufwendig. Die zwangsläufig erforderliche chargenweise Durchführung erweist sich als unwirtschaftlich und zusätzliche Probleme resultieren aus der notwendigen Reinigung des Mischzylinders zwischen den einzelnen Ansätzen. Die für die Verfahrensdurchführung erforderlichen tiefen Temperaturen von mindestens -20°C sind nicht ohne technische Schwierigkeiten zu realisieren und bedingen einen hohen Energieverbrauch, wozu die Nachteile hinzukommen, die das Bedienungspersonal auf sich nehmen muß. Zum Versprühen des vorher verflüssigten Fettes, gegebenenfalls im Gemisch mit Geschmacksstoffen, werden spezielle Sprühdüsen und Maßnahmen benötigt, um ein einwandfreies Arbeiten der Düsen ohne Verstopfung und deren Reinigung nach Gebrauch sicherzustellen.

In der US-PS 3 603 313 wird die Aufbringung von ursprünglich flüssigem, jedoch gefrierbarem genießbarem Material, wie Buttersoß, auf tiefgefrorene stückige Lebensmittel, wie Erbsen, beschrieben. Die homogenisierte und speziell präparierte Buttersoß muß auf etwas unter dem Gefrierpunkt liegende Temperaturen heruntergekühlt und unter relativ hohem Druck auf die in einem Rollfaß bewegten tiefgekühlten Erbsen gesprüht werden, auf denen sie durch Gefrierhaftung gebunden wird. Dieses Verfahren ist mit den meisten oben in bezug auf die DE-PS 29 26 992 aufgezeigten Nachteile behaftet und ergibt keine verzehrfertigen Fertigmenüs, deren Herstellung Gegenstand vorliegender Erfindung ist.

Das erfindungsgemäße Verfahren zeichnet sich durch große Einfachheit und Wirtschaftlichkeit aus auf Grund der kontinuierlichen Verfahrensdurchführung bei über dem Gefrierpunkt liegenden Temperaturen in einer für den angestrebten Zweck besonders geeigneten Vorrichtung, die Sprühdüsen überflüssig macht und leicht zu steuern und zu reinigen ist. Diese Vorrichtung basiert auf einer unter dem Handelsnamen "Transitube" bekannten Apparatur, die zum Ummanteln von Snackprodukten wie Nüssen entwickelt und für die Durchführung des erfindungsgemäßen Verfahrens entsprechend modifiziert wurde zur zentralen Steuerung des Auftropfens von Flüssigfett mit Hilfe eines Fettdosierers und für das Herabfallenlassen von Geschmacks-und Gewürzfeststoffen mit Hilfe einer vibrierenden Separationsrinne oder eines Schneckendosierers. Durch die beiden in einem Doppeltrog sich gegeneinander drehenden Bürstenschnecken werden die eingespeisten stückigen TK-Lebensmittel nach oben fliegend in eine rotierende Bewegung versetzt und gleichzeitig nach vorwärts getrieben, was eine Vorbehandlung des Einspeisgutes durch Entfernung von Kondenswasserschnee erübrigt, zu einer besonders gleichmäßigen und fest haftenden Ummantelung der rotierenden und vorwärtsbewegten Lebensmittelstücke durch herabfallendes Flüssigfett und Geschmacksstoffgemisch führt und auf Grund dieser schnell zu bewirkenden Effekte das Arbeiten bei über dem Gefrierpunkt liegenden Temperaturen ermöglicht.

Daß es generell möglich sein könnte, die bekannte Vorrichtung, selbst nach entsprechender Modifizierung, zur Durchführung des erfindungsgemäßen Verfahrens einzusetzen, war nicht zu erwarten. So muß bei der Herstellung von TK-Fertiggerichten des erfindungsgemäß erzeugten Typs für die Aufrechterhaltung relativ tiefer Temperaturen gesorgt werden, um eine permanente Gefrierhaftung von Fett an den Oberflä-

2

chen der behandelten Lebensmittel und eine ebenso feste Haftung der Geschmacksstoffe an den erzeugten Fettschichten sicherzustellen, was eine genau gesteuerte Restklebrigkeit dieser Schichten voraussetzt. Gemäß Stand der Technik wurde davon ausgegangen, daß diese Voraussetzungen nur in geschlossenen Gefäßen durch entsprechende Kühlmaßnahmen erzielbar seien. Eine Vorrichtung des bekannten Typs, die mit offenem Mischkanal arbeitet und zur Ummantelung von ungekühlten stückigen Lebensmitteln wie z.B. Erdnüssen mit z.B. Salz, gegebenenfalls unter Zusatz von Öl, das von unten über Pumpen aufgespritzt wird, dient, wobei das Problem der Kühlung überhaupt nicht auftritt, schien für den erfindungsgemäßen Einsatz völlig undiskutabel. Überraschenderweise zeigte sich jedoch, daß nach Modifizierung der Anlage in bezug auf Zentralsteuerung der Zudosierung von Flüssigfett und Geschmacksstoff-Trockenkomponenten von oben in den Mischkanal ein optimaler Temperaturgradient von tiefgekühlten stückigen Lebensmitteln erzielbar ist und eine kontinuierliche Verfahrensdurchführung bei über dem Gefrierpunkt liegenden Temperaturen zu den aufgezeigten, nicht vorhersehbaren Vorteilen führt.

Der den Mischkanal umfassende wesentliche Teil der erfindungsgemäß eingesetzten Vorrichtung wird durch die beigefügten Figuren näher erläutert, in der darstellen

Figur 1/2 eine Draufsicht auf den Doppeltrog mit den beiden den Mischkanal begrenzenden Bürstenschnecken und

Figur 2/2 einen Querschnitt durch den in Figur 1/2 dargestellten Vorrichtungsteil längs der Linie II/II von Figur 1/2.

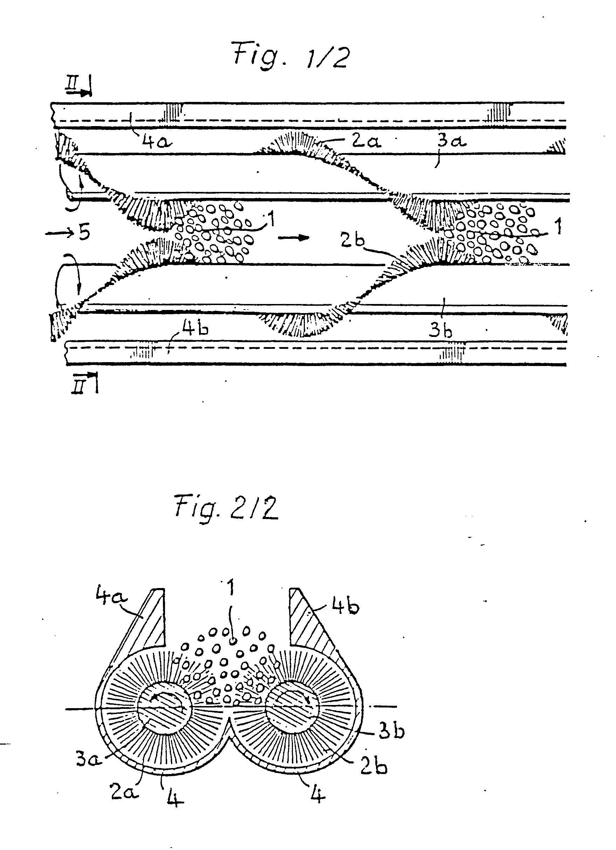

Wie aus den Figuren ersichtlich, wird das Einspeisgut 1 gemäß Figur 1/2 in der Zeichenebene von links nach rechts rotiert und vorwärtsgetrieben durch die kammartigen Bürsten 2a, 2b, die an den Drehachsen 3a, 3b schneckenartig befestigt sind und von einem Doppeltrog 4, dessen Oberteil 4a, 4b den Mischkanal 5 begrenzt, zu etwa 3/4 umschlossen werden. Auf das über einen nivellierten Vorratstrichter in gesteuerter Menge kontinuierlich eingespeiste Füllgut werden während dessen Rotation und Vorwärtsbewegung das Flüssigfett und das Geschmacksstoffgemisch über die oben genannten, in den Figuren nicht gezeigten Einrichtungen kontinuierlich zudosiert.

Das kontinuierlich abgezogene ummantelte Produkt wird in üblicher bekannter Weise Waagen zugeführt, die es automatisch in Folienbeutel einwiegen und, gegebenenfalls nach separater automatischer Zuwiegung von gefrosteten gegarten Fleischstücken, erfolgt das Verschweißen der Beutel, das Etikettieren, der Durchlauf im Kühltunnel, das Abpacken und der Versand.

Bei den zur Durchführung des erfindungsgemäßen Verfahrens verwendeten Lebensmitteln handelt es sich insbesondere um folgende Gemüse: Butterpilze, Zwiebelsegmente, Champignons, Paprikastreifen, Mais, Möhren, Zuckerschoten, Erbsen, Blumenkohl, Bohnen, Perlzwiebeln, Tomaten, Zucchini und Artischocken.

Als Geschmacksstoffe eignen sich insbesondere die folgenden Gewürze: Salz und/oder eine unter dem Handelsnamen "Culikraft" bekanntes Würzmittelgemisch aus 70 % Salz sowie Rinderfett und natürlichen Aromastoffen, ferner Pfeffer, Paprika, Knoblauch, Oregano, Petersilie, Muskat, Zwiebelpulver, Kerbel, Tomatenmarkpulver, Chilipulver, Creme fraiche-Pulver und Ketchuppulver, die zusammen mit Sahnepulver, Stärke und Creme fraiche-Pulver zum Einsatz gelangen.

Als Flüssigfett dienen pflanzliche Fette und Öle und als Bindemittel eignen sich modifizierte Stärke und Weizenmehl, wobei auch Stabilisatoren zugesetzt werden können.

Die Erfindung wird anhand eines Gemüse/Rindfleisch-Fertiggerichts durch das folgende Beispiel näher erläutert.

Beispiel

Es wurde eine Geschmacksstoff-Trockenmischung hergestellt durch Homogenisieren von Zwiebelpulver, Salzwürzmittelgemisch des angegebenen Typs, schwarzem Pfeffer und Salz in einem Pflugscharmischer mit Querstrommesser unter kontinuierlicher Beschickung des Mischers mit Sahnepulver, Stärke und Creme fraiche-Pulver. Die Einzelmengen der Komponenten wurden so bemessen, daß zusammen mit dem zusätzlich einzusetzenden Flüssigfett ein Würzungskompound der in Tabelle I wiedergegebenen Zusammensetzung zum späteren Einsatz gelangte.

Tabelle I

| Flüssigfett | 40,00 % |
|---|---|
| Zwiebelpulver | 0,90 % |
| Salzwürzmittelgemisch | 1,19 % |
| Pfeffer schwarz | 0,19 % |
| Salz | 5,40 % |
| Sahnepulver | 9,00 % |
| Stärke | 1,50 % |
| Creme fraiche | 41,82 % |
| | 100,00 % |

Als TK-Lebensmittel wurden die in der folgenden Tabelle II aufgeführten TK-Gemüse über Zuführrinnen kontinuierlich einem Trommel- oder Freifallmischer zugeführt:

Tabelle II

| Champignons geschält | 16,7 % |
|---|---|
| Zwiebeln | 18,6 % |
| Paprikastreifen rot | 28,4 % |
| Paprikastreifen grün | 19,6 % |
| Stockschwämmchen | 16,7 % |
| | 100,0 % |

Die gemischten Gemüsestücke wurden direkt in den Vorratstrichter des Mischkanals der Verarbeitungsvorrichtung jeweils bis zum gleichen Niveau eingefüllt und von dort kontinuierlich in den Mischkanal eingespeist.

Während das Füllgut durch die sich gegeneinander drehenden Bürstenschnecken rotiert und vorwärtsgetrieben wurde, erfolgte das Zutropfen der in Tabelle I definierten Menge an Flüssigfett mit Hilfe eines Fettdosierers.

Über eine direkt nach dem Fettdosierer installierte vibrierende Separationsrinne oder über einen Schneckendosierer wurde das vorgefertigte Geschmackstoff-Trockengemisch, dessen Zusammensetzung aus Tabelle I ableitbar ist, kontinuierlich aufgegeben.

Das abgezogene ummantelte Gemüseprodukt wurde unter automatischer Zuwiegung von gefrosteten gegarten Rindfleischstücken kontinuierlich abgepackt.

Unter Verarbeitung von 60 kg/min Beschickungsmaterial im Mischkanal wurden folgende Temperaturen während der Verfahrensdurchführung gemessen:

| Ausgangstemperatur des Lebensmittelprodukts vor der Beschickung | -20 °C |
|---|---|
| Produkttemperatur beim Beschicken des Mischkanals | -18 °C |
| Produkttemperatur beim Austritt aus dem Mischkanal | -16 °C |
| Produkttemperatur nach Befüllen der Beutel | -14 °C |
| Produkttemperatur vor Tunneleintritt | -14 °C |
| Produkttemperatur bei Tunnelaustritt | -20 °C |

Das Einwiegen in Beutel nahm 2 min in Anspruch und das Verschweißen der Beutel einschließlich Transport von der Mehrkopfwaage bis Tunneleintritt dauerte 0,5 min.

Das fertige Gemüse-Rindfleischgericht hatte die in der folgenden Tabelle III angegebene Zusammensetzung:

Tabelle III

| Rindfleisch gegart | 18,66 % |
|---|---|
| Champignons geschält | 11,33 % |
| Zwiebeln | 12,66 % |
| Paprikastreifen rot | 19,33 % |
| Paprikastreifen grün | 13,36 % |
| Stockschwämmchen | 11,33 % |
| Würzungskompound | 13,33 % |
| | 100,00 % |

Fertiggerichte anderen Typs wurden in analoger Weise hergestellt unter Verwendung von teilweise anderen Gemüsearten, wie Tomatenwürfeln, Zucchini- und Artischockenscheiben, und/oder Beilagenkomponenten, wie Reis, Nudeln und Kartoffelwürfeln, sowie unter Einsatz von teilweise anderen Gewürzen, Bindemitteln und Milchtrockenprodukten in der Geschmacksstoffmischung, sowie unter Verwendung von Sahne statt oder zusätzlich zu Flüssigfett.

Die überraschenden Vorteile des erfindungsgemäßen kontinuierlichen Verfahrens gegenüber einem diskontinuierlichen Verfahren gemäß Stand der Technik zeigen folgende Gegenüberstellungen in bezug auf durchschnittliche Fertigungslohnkosten (FLK) und Produktionsmengen.

| FLK erfindungsgemäß (kontinuierlich) per 750 g | = 0,03 DM |
|---|---|
| FLK gemäß Stand der Technik (diskontinuierlich) per 750 g | = 0,16 DM |
| Differenz | = 0,13 DM |

| Produktionsmenge bei 2 Schichten/Tag | |
|---|---|
| erfindungsgemäß 7 h (Takt 60 Beutel/min)<br>Stand der Technik 7 h (Takt 13 Beutel/min) | = 37,8 t<br>= 8,2 t |
| Differenz<br>FLK-Differenz (0,17 DM/kg) bei 37,8 t | = 29,6 t<br>= 6.426,-- DM/Tag |

Diese Überschlagsrechnung zeigt, daß erfindungsgemäß bedeutende Einsparungen in bezug auf Fertigungslohnkosten und beachtliche Steigerungen der Produktionsausbeute erzielbar sind.

**Ansprüche**

1. Verfahren zur Herstellung von beliebig portionierbaren, mit Geschmacksstoffen ummantelten, tiefgefrorenen Fertiggerichten, bei dem tiefgefrorene stückige Lebensmittel vermischt, in freifliegende Bewegung versetzt und in diesem Zustand mit Fett und Geschmacksstoffen versehen werden, worauf das ummantelte Produkt aus der Verarbeitungsvorrichtung abgezogen und gegebenenfalls vor der Verpackung mit nichtummanteltem weiterem Lebensmittelprodukt versetzt wird, dadurch **gekennzeichnet,** daß man
- die einzelnen Verfahrensschritte bei über dem Gefrierpunkt liegenden Temperaturen kontinuierlich durchführt,
- konstante Mengen des Gemisches aus tiefgefrorenen stückigen Lebensmitteln in einen offenen Mischkanal, der sich zwischen und über zwei in einem Doppeltrog angeordneten Bürstenschnecken befindet, einspeist, während die Bürsten schnecken eine solche gesteuerte, gegenläufige Bewegung ausführen, daß das Einspeisgut freifliegend in Rotation versetzt und dabei vorwärts getrieben wird, und
- auf das rotierende Gut zunächst Flüssigfett durch einfaches Auftropfenlassen und anschließend ein vorgefertigtes Gemisch aus trockenen Geschmacksstoffen durch einfaches Herabfallenlassen zudosiert.

2. Verfahren nach Anspruch 1, dadurch gekennzeichnet, daß man die einzelnen Verfahrensschritte bei Temperaturen von +2°C bis Raumtemperatur durchführt.

3. Verfahren nach Anspruch 1, dadurch gekennzeichnet, daß man als stückige Lebensmittel Kartoffelwürfel und/oder Gemüse einsetzt.

4. Verfahren nach Anspruch 3, dadurch gekennzeichnet, daß man als Gemüse Champignons, Perlzwiebeln, Paprikastreifen, Bohnen, Erbsen und/oder Karottenstücke einsetzt.

5. Verfahren nach Anspruch 1, dadurch gekennzeichnet, daß man als Flüssigfett Öl oder Sahne einsetzt.

6. Verfahren nach Anspruch 1, dadurch gekennzeichnet, daß man als Geschmacksstoffe ein homogenisiertes Trockengemisch aus Gewürzen und Sahnepulver, Stärke und Creme fraiche-Pulver einsetzt.

7. Verfahren nach Anspruch 6, dadurch gekennzeichnet, daß man als Gewürze Salz, Pfeffer, Paprika, Knoblauch, Zwiebelpulver und/oder Oregano einsetzt.

8. Verfahren nach Anspruch 7, dadurch gekennzeichnet, daß man als Salz ein unter dem Handelsnamen "Culikraft" bekanntes Würzmittelgemisch aus Salz, Rinderfett und natürlichen Aromastoffen einsetzt.

9. Beliebig portionierbares Tiefkühl-Fertiggericht, herstellbar nach dem Verfahren gemäß Anspruch 1.

Fig. 1/2

Fig. 2/2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,A | DE-A-2 926 992 (DR. OETKER TIEFKUEHLKOST GMBH) * Seite 3, Absatz 2; Seiten 6-8, Beispiel; Ansprüche 1-4 * --- | 1,7 | A 23 L 1/30 A 23 L 1/22 A 23 L 1/40 A 23 L 3/36 |
| A | DE-A-2 455 050 (MAGYAR HUETOEIPAR) * Ansprüche 1-6 * --- | 1,3,5,7 | |
| A | DE-A-2 830 918 (DR. OETKER TIEFKUEHLKOST GMBH) * Seite 4, Absatz 3; Seiten 7,8, Beispiele a,b; Ansprüche 1,2,6-8 * --- | 1,3,4 | |
| A | AT-B- 327 660 (MAGYAR HUETOEIPAR) * Seite 5, Beispiel 5; Ansprüche 1-5 * ----- | 1,4,5,7 | |

**RECHERCHIERTE SACHGEBIETE (Int. Cl.5)**

A 23 L 1/00
A 23 L 3/00

Der vorliegende Recherchenbericht wurde für alle Patentansprüche erstellt

| Recherchenort | Abschlußdatum der Recherche | Prüfer |
|---|---|---|
| BERLIN | 17-11-1989 | SCHULTZE D |